Europäisches Patentamt

European Patent Office

Office européen des brevets

(11) Publication number: **0 331 410**
**A2**

# (12) EUROPEAN PATENT APPLICATION

(21) Application number: 89301948.9

(22) Date of filing: 27.02.89

(51) Int. Cl.⁴: **C09J 3/14 , C08L 23/20**

(30) Priority: **29.02.88 US 161874**

(43) Date of publication of application:
**06.09.89 Bulletin 89/36**

(84) Designated Contracting States:
**AT BE CH DE ES FR GB GR IT LI LU NL SE**

(71) Applicant: **SHELL OIL COMPANY**
**900, Louisiana Street**
**Houston Texas 77002(US)**

(84) **AT BE CH DE ES FR GB GR IT LI LU NL SE**

Applicant: **MITSUI PETROCHEMICAL**
**INDUSTRIES, LTD.**
**2-5, Kasumigaseki 3-chome Chiyoda-ku**
**Tokyo 100(JP)**

(84) **DE**

(72) Inventor: **Mostert, Simon**
**13023 King Circle**
**Cypress Texas 77429(US)**

(74) Representative: **Myerscough, Philip Boyd et al**
**J.A.Kemp & Co. 14, South Square Gray's Inn**
**London, WC1R 5EU(GB)**

(54) Hot melt adhesive comprising a butene-1 polymer.

(57) A hot melt adhesive composition comprising;
(i) 50 to 5 percent by weight of a butene-1 polymer;
(ii) 50 to 95 percent by weight of a tackifying resin; with the weight percentages of (i) and (ii) being based upon their combined weight;
(iii) 0.01 to 1 parts by weight of a nucleating agent;
(iv) up to 2 parts by weight of a stabilizer;
(v) up to 30 parts by weight of a plasticizer; and
(vi) up to 30 parts by weight of a wax, the parts by weight of (iii) to (vi) being based on 100 parts by weight (phr) of (i) and (ii) can readily be formulated with an open time tailored to an intended use.

EP 0 331 410 A2

## HOT MELT ADHESIVE COMPRISING A BUTENE-1 POLYMER

This invention relates to hot melt adhesives which exhibit a controllable open time and which contain a butene-1 polymer.

Adhesive open time is the longest time that an adhesive material remains capable of adhesion (adhesion to itself or to a substrate) after it has been cooled from the melt to room temperature. Hot melt adhesives which exhibit a long open time (greater than 20 minutes), as well as good cold metal bonding, have long been sought for various applications which require a long open time. For example, extensive surfaces to be coated by adhesives such as table tops to which laminates are bonded or assembly line auto parts which are coated with adhesive or sealant and later contacted with other parts at some point further down the assembly line are particularly suited to the use of hot melt adhesives which display long open times. Sometimes adhesive coated parts must remain uncontacted for as long as several hours, and thus require longer open times than are exhibited by and characteristic of polymers typically used in nonpressure sensitive hot melt adhesives.

Hot melt adhesives can be formulated to be pressure sensitive and have an infinite open time but these adhesives are usually soft, tacky and have limited strength and adhesion. Conventional hot melts such as formulations of poly(ethylene/vinyl acetate (EVA), polyethylenes, polyamides or polyesters are rigid, form good strong bonds to certain substrates but have short open time, usually less than 1 minute. Moreover, these adhesives usually have problems in adhering to cold metal substrates which is often required for automotive applications.

Solvent applied contact adhesives can be formulated to give good bond strengths and reasonable open times but they require the use of solvents which can be toxic, a pollutant and/or a fire hazard.

Butene-1 polymers are primarily linear chain molecules with regular and spatially ordered arrangements of ethyl side groups, the pendant groups that result when butene-1 is polymerized across the 1,2-double bond, along an ethylene chain backbone (see US-A-3,362,940). When cooled from a melt, the ethyl side groups initially align in a tetragonal spatial arrangement (form II). With time the tetragonal crystalline phase form II transforms into a stable hexagonal spatial arrangement (Form I) with subsequent development of improved physical properties.

The butene-1 polymers are a unique group of olefinic polymers because of their slow crystallization rate. The very slow crystallization rate of butene-1 polymers, in contrast to the crystallization rate of other crystalline polymers such as EVA, polyethylene and polypropylene, has been found to be beneficial in formulating hot melt adhesives which have very long open times as well as good adhesion and bonding to cold, heat-sink type substrates, for example metals, such as stainless steel and anodized aluminum. In EP-A-173415 we describe hot melt adhesives comprising a blend of an at least partially crystalline copolymer of butene-1 and ethylene, an aliphatic, substantially non-polar resin, an antioxidant and optionally a microcrystalline wax.

According to the invention there are provided hot melt adhesive compositions comprising:

(i) 50 to 5, preferably 50 to 30, especially about 50, percent by weight of a butene-1 polymer;

(ii) 50 to 95, preferably 50 to 70, especially about 50, percent by weight of a tackifying resin; with the weight percentages of (i) and (ii) being based upon their combined weight;

(iii) 0.01 to 1 parts by weight of a nucleating agent;

(iv) up to 2 parts by weight of a stabilizer;

(v) up to 30 parts by weight of a plasticizer; and

(vi) up to 30 parts by weight of a wax, the parts by weight of (iii) to (vi) being based on 100 parts by weight (phr) of (i) and (ii).

The nucleating agent increases the rate of crystallization of the butene-1 polymers and this is beneficial in the formulation of hot melt adhesives where the open time can be tailored to the intended use. The adhesives require no solvents, have open times which can readily be adjusted according to need from long to short, and adhere well to cold metal substrates.

The butene-1 polymer (i) can be a homopolymer or copolymer of butene-1 with at least one comonomer, the copolymer suitably containing up to 30 mole percent of comonomer. For example there can be used butene-1 copolymers with, as comonomer, propylene, ethylene or an alpha olefin having from 5 to 8 carbon atoms, preferably containing from 1 to 30 mole% of comonomer. The butene-1 polymer (i) can also be a modified butene-1 homopolymer or copolymer which has been functionalized with, for example, 0.1 to 5 wt% maleic anhydride as described in US-A-4,554,304. Modified or non-modified butene-1 copolymers are preferred over modified or non-modified butene-1 homopolymers for use as ingredient (i).

Suitable butene-1 copolymers are described in US-A-3,362,940. Butene-1/ethylene copolymers having an ethylene content of 0.5 to 20 mole percent are particularly useful in the hot melt adhesive of the invention as the ethylene comonomer lowers the glass transition temperature (Tg) of the amorphous phase, and reduces both the crystallization rate and the ultimate level of crystallinity in the polymer. A copolymer having a comonomer content of 11 mole% is especially useful.

The butene-1 polymer (i) can have a melt flow within a wide range, for example from 0.25 to 1000 MF.

The present invention provides a hot melt adhesive with open time that is adjustable and controllable based on the amount and type of tackifying resin and nucleating agent blended with the butene-1 polymer component.

Tackifying resins usable as component (ii) in the adhesives of the present invention can be, for example, a non-polar tackifying resin, such as partially or completely hydrogenated hydrocarbon resin, a polyterpene resin, a $C_5$ stream resin or a $C_9$ stream resin. Particular examples of suitable non-polar resins include Regalrez 1078 (a hydrogenated hydrocarbon resin) made by Hercules, Escorez 1304 (also a hydrocarbon resin) available from Exxon Chemical Company and Wingtack 85 or 95 (synthetic polyterpene resins available from Goodyear Tire and Rubber. Non-tackifying polar resins used as component (ii) suitably have softening points of 70°C to 125°C. Polar tackifying resins can also be used as component (ii) but the choice of available polar tackifying resins is limited since many of the polar resins are not, at least partially, compatible with the butene-1 polymers. However, Zonester 85, available from Arizona Chemical Company, is a polar tackifying resin which can be used.

The nucleating agent (iii) which causes the butene-1 polymer (i) to crystallize faster is present in amount from 0.01 to 1 phr, preferably 0.5 to 1 phr, and is used to reduce the adhesive's open time and provide a means for controlling the open time. Suitable nucleating agents include for example, isotactic polypropylene, polyethylene, a polyethylene-based wax, a fatty acid amide, another amide, an anthraquinone and graphitic non-turbostratic carbon. Graphitic non-turbostratic carbon nucleating agents are disclosed in US-A-4,321,334. Fatty acid amide nucleating agents as disclosed in US-A-4,322,503 and include N,N'-ethylene-bis-stearamide and stearamide. Anthraquinone nucleating agents include 1,2-dihydroxy-9, 10-anthraquinone; 1,4-dihydroxy-9,10-anthraquinone; 1,5-dihydroxy-9, 10-anthraquinone; 12,5,8-tetrahydroxy-9, 10-anthraquinone; 9,10-anthraquinone; and sodium 2-anthraquinone sulfonate. Amide nucleating agents are disclosed in US-A-4,320,209 and include 1-naphthalene acetamide; N stearoyl-p-aminophenol; mercapto-n-2-naphthylacetamide; malonamide; nicotinamide; isonicotinamide; benzamide; phthalimide; salicylamide; anthranilamide; and 1,8-napthalimide.

Stabilizers suitable for use as component (iv) in the adhesives of the present invention include hindered phenols, such as Irganox 1010 made by Ciba Geigy Corporation and Ethanox 330 made by Ethyl Corporation, or phosphorus-based stabilizers, such as Irgafos 168 made by Ciba Geigy Corp. Ethanox 330 is 1,3,5,-trimethyl-2,4,6-tris [3,5-di-tert-butyl-4-hydroxy-benzyl] benzene while Irganox 1010 (the most preferred stabilizer) is usually referred to as tetrakis [methylene (3,5-di-tert-butyl-4-hydroxyhydrocinnamate)] methane. It is preferred to use up to 1 phr, especially about 0.3 phr, of a stabilizer, although 0.1 to 2 phr is also usable within the scope of the invention.

Plasticizers, such as oils, like Shellflex® 371, can also be added to the adhesive composition in amount up to 30 phr to reduce the cost of the final product. Atactic polypropylene such as Afax from Hercules Inc. can be used as a plasticizer. The plasticizer may also enhance processability of the adhesive.

Waxes which can be used as component (vi) in the adhesives of the present invention include microcrystalline waxes. The waxes are optional and may be used in amounts up to 30 phr, such as to 10 to 30 phr, preferably 20 phr. Shellwax® 100, 300 and 500 are examples of waxes which are preferred for use. The use of a wax provides the advantage of lowering the viscosity of the overall adhesive composition without substantially decreasing the adhesive strength and/or the service temperature of the adhesive.

The hot melt adhesives of the present invention may be used, for example, to provide laminated structures and can be applied in a continuous or non-continuous manner. The laminated structures may, for example, contain one of the following as a substrate: high density polyethylene (HDPE), polypropylene (PP), paper, aluminum foil or poly-4-methyl pentene.

The laminated structures can be made by coating the hot melt adhesive on at least one side of the substrate. Sandwich style laminates can also be made with the adhesives of the invention.

The hot melt adhesives of the invention can also be used to provide non-woven articles, such as disposable diapers. Such non-woven articles exhibit good flexibility at the bonds, and have substantial value in the disposable items market sector. The non-woven articles can be prepared from non-woven fabrics, polymer webs, or similar materials. The non-woven material may be a disposable material and may be biodegradable. Specific example of suitable materials are cellulose and polypropylene.

Adhesives can be prepared using either a small Brabender compounding head (approximately 50 cc

3

capacity) or a 0.95 dm³ (one U.S. quart) sigma blade mixer. Test formulations can be easily blended using preheated equipment (170°-180°C) by introducing the butene-1 polymer, mixing until a soft, homogeneous mass is formed, and then gradually introducing the remaining ingredients. Mixing times can be about 20 minutes.

Thin adhesive films (125 to 200 μm) for test purposes can be prepared by casting onto a substrate, for example release-coated polyester film (onto release-coated side), using a pair of heated nip rolls that are adjusted to produce the desired gap (hence the adhesive thickness). Preheated adhesive (at about at least 140°C and up to 200°C) can be poured onto the substrate and hand drawn through the heated nip rolls. Alternatively, the adhesive can be poured onto the substrate and a doctor blade can draw down the adhesive to achieve a uniform coating on the substrate. Other methods of applying hot melt adhesive can also be used. For continuous or non-continuous application, techniques such as spraying the adhesive, using hot melt guns to apply adhesive or extruding the adhesive can be used. Using the first described technique, adhesive films, for example 10 cm wide and 20 cm long (4 inches wide and 8 inches long), can be produced with a small quantity (<60 gms) of adhesive, so that very small quantities of adhesive can be evaluated.

Once cooled and allowed to set, these adhesives can be used to prepare test specimens. For example, Kraft paper to Kraft paper, polypropylene to polypropylene and polyethylene to polyethylene bonds can be made by cutting adhesive squares from the polyester film, peeling them off, placing the adhesive between the paper and heat sealing with a hot bar sealer (time, pressure and temperature can be adjusted). Alternatively, the adhesive square or an adhesive strip may be placed on a piece of plastic or metal substrate, melted with a heat gun (or in an oven), and then joined under moderate contact pressure to form T-peel, Lap shear or SAFT (shear adhesion failure temperature) bonded substrate specimens.

Adhesive Hot Melt Viscosities can be measured at 177°C in a Brookfield Thermocell Viscometer with an RVT head and Number 29 spindle (ASTM D3236); for low viscosity formulations, a number 27 spindle can be used.

Peel Strength can be determined using 25 mm X 150 mm laminate sandwich formed with the substrate of interest, the adhesive being an interlayer between the substrate surfaces. The laminate surfaces can be placed in an Instron tester, one surface in the lower jaw. The jaws can be separated at a rate of 25 cm/min. Force required to peel the surfaces can be recorded continuously. The maximum and minimum values should be noted, as well as failure mode, i.e., adhesive, cohesive or combination thereof. This test should approximate a peel angle of about 90° (T-peel).

The effect of 0.5% by weight of various nucleating agents on the crystallization temperatures (°C) of butene-1-homopolymers and butene-1-ethylene copolymers is detailed in the following Table.

TABLE

|  | Homopolymer | Low $C_2$ copolymer | High $C_2$ copolymer |
|---|---|---|---|
| Neat polymer | 68.7 | 48.4 | 61.3 |
| Polywax 2000[1] | 88.0 | 73.0 | 76.0 |
| HDPE alathon 7815 | 86.6 | 70.5 | 61.5 |
| Acrawax C | 86.2 | 64.0 | - |
| Stearamide | 79.0 | 70.0 | 71.0 |
| Sodium benzoate | 80.0 | 58.5 | - |
| Polypropylene high MF | - | - | 70.1 |
| Polypropylene low MF | - | - | 66.0 |

[1]Polyethylene with molecular weight of 2000 from Petrolite Corp.

The effect of including a nucleating agent on the open time of a neat butene-1-ethylene copolymer is masked. Thus when 0.5% by weight of a polypropylene nucleating agent is incorporated in a polybutylene having an open time of 3 minutes, the open time is reduced to about 1 minute. The use of 1% by weight of the polypropylene reduces the open time to about 0.5 minute and the use of 0.5 weight percent stearamide reduces the open time to about 0.25 minute. By contrast the open time of a neat PVA is only about 0.25 minute and the same possibilities of adjusting open time to suit end use do not exist.

The following Examples will help to illustrate the invention.

## Comparative Example 1

50 parts by weight of butene-1/ethylene copolymer (Duraflex 8910 from Shell Oil Company, Houston, Texas, U.S.A.) were blended with 50 parts by weight of a tackifying resin (Arkon P-85 from Arakawa Chemical Inc., U.S.A.). The open time was measured by applying the test recipe as a hot melt onto two surfaces at ambient temperature, waiting a specified time, and then pressing the adhesive surfaces together under moderate pressure (adhesive to adhesive). Within 10 minutes of bond formation the surfaces were pulled slowly apart under tension. The maximum open time is indicated by the longest waiting time between application of the hot melt and bond formation that yields a bond which does not fail at the adhesive/adhesive interface. The open time of the simple blend thus determined was more than 30 minutes.

## Example 1

When 0.5 parts by weight of an isotactic polypropylene (5AO9) was added to the blend of Comparative Example 1 the open time was reduced to 10 minutes.

## Example 2

When 0.5 parts by weight of stearamide was added to the blend of Comparative Example 1 the open time was reduced to less than 0.5 minute.

## Comparative Example 2

A blend of equal parts of EVA and a tackifying resin (Picco 6070) had an open time of about 1 1/4 minutes.

**Claims**

1. A hot melt adhesive composition comprising;
(i) 50 to 5 percent by weight of a butene-1 polymer;
(ii) 50 to 95 percent by weight of a tackifying resin; with the weight percentages of (i) and (ii) being based upon their combined weight; agent;
(iii) 0.01 to 1 parts by weight of a nucleating
(iv) up to 2 parts by weight of a stabilizer;
(v) up to 30 parts by weight of a plasticizer; and
(vi) up to 30 parts by weight of a wax, the parts by weight of (iii) to (vi) being based on 100 parts by weight (phr) of (i) and (ii).

2. A hot melt adhesive according to claim 1, which comprises 50 to 30 percent by weight of (i) and 50 to 70 percent by weight of (ii).

3. A hot melt adhesive according to claim 1, which comprises about 50 percent by weight of (ii).

4. A hot melt adhesive according to claim 1, 2 or 3, wherein said butene-1 polymer (i) is a copolymer of butene-1 with, as comonomer, ethylene, propylene, or an alpha olefin of 5 to 8 carbon atoms.

5. A hot melt adhesive according to claim 4 wherein the copolymer contains from 1 to 30 mole percent of comonomer.

6. A hot melt adhesive according to any one of the preceding claims, wherein said tackifying resin (ii) is a non-polar tackifying resin selected from partially hydrogenated hydrocarbon resin, completely hydrogenated hydrocarbon resin, polyterpene, $C_5$ stream resin, and $C_9$ stream resin.

7. A hot melt adhesive according to any one of the claims 1 to 5, wherein said tackifying resin (ii) is a polar tackifying resin which is at least partially compatible with the butene-1 polymer (i).

8. A hot melt adhesive according to any one of the preceding claims wherein said nucleating agent (iii) is at least one of isotactic polypropylene, polyethylene, polyethylene wax, a fatty acid amide, another amide, anthraquinone and graphitic non-turbostratic carbon.

9. A hot melt adhesive according to any one of the preceding claims wherein said stabilizer (iv) is a hindered phenol.

10. A hot melt adhesive according to claim 8, wherein said hindered phenol is a tetrakis[methylene (3,5 di-tert-butyl-4-hydroxyhydrocinnamate)] methane.

11. A hot melt adhesive according to any one of the preceding claims wherein the plasticizer (v) is an oil.

12. A hot melt adhesive according to any one of the preceding claims wherein the wax (vi) is a microcrystalline wax.

13. A laminar structure comprising a substrate coated on at least one side with a hot melt adhesive as claimed in any one of the preceding claims.

14. A laminar structure according to claim 13 wherein said substrate is of high density polyethylene, polypropylene, paper, aluminum foil or poly-4-methylpentene.

15. An article comprising a non-woven substrate bonded with a hot melt adhesive as claimed in any one of claims 1 to 12.

16. An article according to claim 15, wherein said non-woven substrate is of cellulose or polypropylene.